# EUROPÄISCHE PATENTSCHRIFT

(11) **EP 1 348 081 B1**
(45) Veröffentlichungstag und Bekanntmachung des Hinweises auf die Patenterteilung: **01.09.2004**
(21) Anmeldenummer: 02754680.3
(22) Anmeldetag: 14.06.2002
(51) Int. Cl.: F16H 7/00, F16H 7/08, F16H 7/12

(54) **SPANNSCHIENE MIT ZWEI AUFDRÜCKBEREICHEN**
SLIDE RAIL WITH TWO COMPRESSION REGIONS
GLISSIERE DE SERRAGE DOTEE DE DEUX ZONES DE COMPRESSION

(30) Priorität: 19.09.2001 DE 20115472 U
(43) Veröffentlichungstag der Anmeldung: 01.10.2003
(73) Patentinhaber: Joh. Winklhofer & SöhneGmbH und Co.KG, 81369 München (DE)
(72) Erfinder: FINK, Thomas, 85221 Dachau (DE); ZIMMERMANN, Stefan, 81541 München (DE); BACHMAIR, Peter, 81371 München (DE)
(74) Vertreter: Grünecker, Kinkeldey, Stockmair & Schwanhäusser Anwaltssozietät
(86) Internationale Anmeldenummer: PCT/EP2002/006602
(87) Internationale Veröffentlichungsnummer: WO 2003/025427

(56) Entgegenhaltungen:
- EP-A- 1 036 956
- DE-A- 19 851 601
- DE-A- 19 855 627
- DE-A- 19 905 579
- DE-C- 19 704 899
- US-B1- 6 213 073

## Beschreibung

Die vorliegende Erfindung betrifft eine Spannschiene für einen Zugmitteltrieb, nach dem Oberbegriff des Anspruchs 1.

Eine solche Spannschiene ist im Gattungsgemäßen Dokument DE 19855627A beschrieben.

Insbesondere bei Steuerkettentrieben bei Verbrennungsmotoren sind derartige Spannschienenanordnungen mit auf diesen wirkenden Kettenspannern bekannt. Als Schwenkbefestigungsmittel weisen die Spannschienen entweder eine Öse bzw. Buchse auf, die auf einem Schwenkbolzen des Motorgehäuses bzw. Kettengehäuses schwenkbar gelagert ist, oder die Spannschiene ist selbst mit einem Schwenkbolzen versehen, der in einer geeigneten Lageraufnahme am Motor aufgenommen ist. In Abhängigkeit des Abstands von der so vorgegebenen Schwenkachse und der Auswahl des Spannmittels, insbesondere eines Kettenspanners (der in vielen Fällen an den Motorhydraulikkreislauf angeschlossen ist), lässt sich die Spannwirkung einstellen. Aufgrund der Tatsache, dass am Aufdrückbereich der Spannvorrichtung relativ große Kräfte wirken und es bei vielen Konstruktionen zu Relativbewegungen (Gleitbeanspruchung) zwischen Spannvorrichtung und Spannschiene kommt, sind in aller Regel speziell ausgeformte Aufdrückbereiche vorgesehen, die speziell auf diese Aufdrückgegebenheiten durch die Spannvorrichtung ausgestaltet sind. In vielen Fällen sind diese Aufdrückbereiche verstärkt ausgeführt und/oder mit einer seitlichen Führung für die Spannvorrichtung versehen. Der Aufbau der Spannschiene kann vielfältig gewählt werden. Im Stand der Technik gibt es sowohl einstückige Konstruktionen, als auch Mehrkomponentenkonstruktionen. In letzter Zeit setzen sich immer mehr Spannschienen mit einer stabilen Tragkonstruktion und einem speziell ausgestalteten Gleitbelagaufsatz durch. Dieser Gleitbelagaufsatz wird dann gegen das Endlostreibelement, insbesondere eine Kette, gedrückt und ist in aller Regel aus Verschleißgründen austauschbar. Auch für eventuell verwendbare Materialien bzw. Materialkombinationen gibt es im Stand der Technik vielfältig verwendbare Möglichkeiten. Bezüglich der Spannvorrichtung kann ebenfalls auf eine großes Repertoire unterschiedlich ausgestalteter Konstruktionen zurückgegriffen werden. In den meisten Fällen verfügen die Spannvorrichtungen über einen federvorgespannten Spannkolben, der auch mit einer Druckkammer, die an den Motorhydraulikkreislauf angeschlossen ist, zusammenwirkt. Aus fertigungstechnischen Gründen ist man insbesondere auf dem Bereich des Automobilbaus, immer wieder bestrebt, Kosten einzusparen, wobei oftmals schon geringfügige Vorteile sich aufgrund der zu erwartenden hohen Stückzahlen sehr positiv auswirken.

Es ist daher die Aufgabe der vorliegenden Erfindung, eine Spannschiene der eingangs genannten Art bereitzustellen, die einen Kostenvorteil, insbesondere im Serieneinsatz, verspricht.

Diese Aufgabe wird erfindungsgemäß durch die Merkmalskombination des Anspruchs 1 gelöst.

Durch diese Ausgestaltung eröffnen sich eine Reihe von zusätzlichen Einbaumöglichkeiten für eine derartige Spannschiene. Die Spannschiene kann sozusagen im Rahmen eines Baukastensystems verwendet werden und ist nicht nur auf einen einzigen Anwendungsfall hin ausgestaltbar. Die Verwendung von mindestens einem zweiten Aufdrückbereich lässt sowohl das Anordnen einer gänzlich anderen Spannvorrichtung als auch das Anordnen einer Spannvorrichtung gleicher oder anderer Bauart in einem anderen Abstand zum Schwenkbefestigungsmittel zu. Eine solche Spannschiene könnte nicht nur in einem Motor an verschiedenen Stellen eines Zugmitteltriebs eingesetzt werden, sondern die Verwendung der Spannschiene könnte auch motorübergreifend Anwendung finden. Solche vielfachen Anwendungsmöglichkeiten bestehen selbstverständlich nicht nur auf dem Bereich des Automobilbaus. Eine solche Spannschiene führt zu einer geringeren Teilevielfalt mit den damit einhergehenden geringeren Lagerverwaltungskosten, etc. Die Stückzahlkosten lassen sich aufgrund der zu erwartenden höheren Stückzahlen ebenfalls senken.

Bevorzugt kann der erste und/oder zweite Aufdrückbereich eine konvex gekrümmte Aufdrückfläche aufweisen. Hierdurch wird den Aufdrückbereichen zusätzliche Stabilität verliehen. Des Weiteren gestaltet sich das Entlanggleiten z.B. eines Spannkolbens einer Spannvorrichtung hierdurch günstiger. Auch die dadurch erreichte erhabene Ausgestaltung (man könnte von einem Aufdrücksattel sprechen) führt zu günstigen Angriffsverhältnissen für die Spannvorrichtung.

Die Aufdrückflächen des ersten und zweiten Aufdrückbereichs können als im Wesentlichen zusammenhängendes Wellenprofil ausgebildet sein. Das bedeutet, dass sich zwei erhabene Bereiche mit dazwischenliegendem "Tal" aneinander anschließen, so dass sie auch durch eine gemeinsame Konturierung der Spannschiene erzeugbar sind. Die "Wellenberge" können dann jeweils anders für den jeweils speziellen Anwendungszweck ausgestaltet werden.

Gemäß einer Ausführungsform sind die Aufdrückflächen von der Rückseite der Spannschiene gebildet. Es handelt sich hierbei um eine sehr einfache und kostengünstige Ausgestaltung der Aufdrückflächen, insbesondere gegenüber Varianten, bei denen diese seitlich an der Spannschiene angeordnet sind.

Damit eine exakte Führung der Spannvorrichtung erfolgt, kann weiter vorgesehen werden, dass der erste und/oder zweite Aufdrückbereich eine als vertiefte Gleitbahn ausgestaltete Aufdrückfläche aufweist oder aufweisen. In vielen Fällen erfolgt das in Form einer in der Oberfläche eingeformten Nut, in der dann z.B. ein Spannkolbenende einer Spannvorrichtung eingefügt ist und sich entlang des Nutgrundes auf der Gleitbahn bewegen kann. Hierdurch ist eine seitliche Fixierung des gesamten Aufbaus gegeben.

Des Weiteren kann die Spannschiene einen Tragkörper und einen darauf angeordneten Gleitbelagkörper umfassen, wobei der erste und zweite Aufdrückbereich am Tragkörper angeordnet sind. Der Tragkörper ist in vielen Fällen aus einem verstärkten bzw. aus einem von sich aus festen Werkstoff gebildet, so dass die hochbelasteten Aufdrückbereiche auch aus diesem Material ausgestaltet werden können.

Eine weitere vorteilhafte Ausgestaltung kann derart erfolgen, dass der Tragkörper als Fachwerkprofil mit einer die Rückseite formenden durchgehenden Rückseitenschiene ausgebildet ist und die Schiene zur Ausbildung des ersten und zweiten Aufdrückbereichs bereichsweise wellenförmig verläuft.
Durch die Ausgestaltung einer durchgehenden Rückseitenschiene lässt sich der Tragkörper sehr einfach ausgestalten, wobei die Aufdrückbereiche durch die Formgebung der Rückseitenschiene integral ausgestaltet werden können.

Günstigerweise kann zwischen dem ersten und dem zweiten Aufdrückbereich mindestens eine Stützstrebe des Fachwerkprofils mit der Rückseitenschiene verbunden sein. Dies verleiht insbesondere dem Tragkörper im Bereich des Aufdrückens der Spannvorrichtung nochmals zusätzlich Stabilität.

Bevorzugt kann eine Schwenkachse des Schwenkbefestigungsmittels von einer in den Tragkörper integrierten Schwenkbuchse vorgegeben sein. Eine solche Schwenkbuchse lässt sich auch einstückig mit dem Tragkörper aus dem gleichen Material erzeugen. Die Spannschiene kann dann in einfacher Weise auf einen geeigneten Schwenkbolzen, z.B. einem Kettengehäuse aufgeschoben werden.

Eine weitere günstige Ausführungsvariante sieht u.a. die Verwendung der Spannschiene für einen Zugmitteltrieb eines Verbrennungsmotors erster und zweiter Bauart vor. Hierzu weist eine Spannschiene für einen Zugmitteltrieb eines Verbrennungsmotors erster Bauart einen am Verbrennungsmotor erster Bauart um eine Schwenkachse schwenkbar anbringbaren Befestigungsbereich und einen Spannarmbereich für die Anlage einer Spannvorrichtung erster Wirkrichtung und/oder Bauart auf. Des Weiteren kann der Befestigungsendbereich auch in einem Verbrennungsmotor zweiter Bauart um die Schwenkachse schwenkbar anbringbar ausgestaltet sein, wobei in einem vorbestimmten anderen Abstand zur Schwenkachse mindestens ein zweiter Aufdrückbereich an dem Spannarmbereich für die Anlage einer Spannvorrichtung zweiter Wirkrichtung und/oder Bauart angeordnet ist. Diese geometrische Ausgestaltung der Spannschiene eröffnet die Möglichkeit, diese in zwei verschiedenen Verbrennungsmotorbauarten einzusetzen. Z.B. könnte der Verbrennungsmotor erster Bauart von einem Vierzylinderreihenmotor vorgegeben sein, während der Verbrennungsmotor zweiter Bauart von einem Sechszylinder-V-Motor vorgegeben ist. Die Spannschiene wäre demnach geometrisch so ausgestaltet, dass sie sowohl in dem einen als auch in dem anderen Verbrennungsmotor eingesetzt werden kann. Es ist lediglich darauf zu achten, dass der Befestigungsendbereich mit gleichem oder geometrisch ähnlichem Befestigungselement anbringbar ist. Für die Spannvorrichtungen der anderen Motorbauarten ist dann jeweils ein eigener Aufdrückbereich an der Spannschiene vorgesehen, so dass eine auf das Motorverhalten abgestimmte Spanncharakteristik Anwendung finden kann. Es besteht demnach die Möglichkeit, die Spannvorrichtung mit einer anderen Wirkrichtung auf den anderen Aufdrückbereich und/oder eine Spannvorrichtung anderer Bauart oder Kraftwirkung einzusetzen. Die Aufdrückbereiche sind dann jeweils an die in den Motorbauarten verwendeten Spannvorrichtungen angepasst.

Hierzu kann weiter vorgesehen werden, dass die Aufdrückflächen des ersten und des zweiten Aufdrückbereichs einen an den jeweiligen Abstand zur Schwenkachse im Zusammenspiel mit der Wirkrichtung und/oder Bauart der ersten oder zweiten Spannvorrichtung angepassten Krümmungsverlauf aufweisen, damit ein im Wesentlichen senkrechtes Aufdrücken der ersten Spannvorrichtung auf den ersten Aufdrückbereich und der zweiten Spannvorrichtung auf den zweiten Aufdrückbereich über den Arbeitsbereich sichergestellt ist. Aufgrund des Verschwenkens der Spannschiene im Einsatz- und späteren Verschleißfall des Zugmittels verändert sich auch die relative Lage des Aufdrückbereichs zur Spannvorrichtung. Damit die Kraftwirkung sich optimal entfalten kann, weist die Aufdrückfläche eine die Schwenkbewegung der Spannschiene ausgleichende Formgebung auf, so dass die Spannvorrichtung möglichst immer senkrecht auf den Aufdrückbereich aufdrücken kann. In den meisten Fällen handelt es sich hierbei um eine Annäherung dieses optimalen Zustands, da es durchaus gewünscht ist, dass sich auch bei weiter verschwenkter Spannschiene auch die Kraftverhältnisse im Aufdrückbereich anders verteilen.

Darüber hinaus bezieht sich die Erfindung auch auf einen Verbrennungsmotor mit einem Zugmitteltrieb, der eine um eine Schwenkachse schwenkbar angeordnete Spannschiene und eine, die Spannschiene gegen ein Endlostreibelement drückende Spannvorrichtung umfasst, wobei die Spannschiene in einem vorbestimmten Abstand zwischen Schwenkachse einen Audrückbereich aufweist, auf den die Spannvorrichtung aufdrückt. Der Verbrennungsmotor zeichnet sich dadurch aus, dass die Spannschiene in einem weiteren vorbestimmten Abstand einen weiteren Aufdrückbereich für eine Spannvorrichtung aufweist. Bei einem einzelnen Verbrennungsmotor erscheint es auf den ersten Blick eine überflüssige Zugabe zu sein, dass die verwendete Spannschiene einen weiteren Aufdrückbereich für eine Spannvorrichtung umfasst. Nimmt man jedoch an, dass diese Spannschiene an anderer Stelle desselben Motors oder bei einem Motor anderer Bauart Anwendung finden kann, so ergeben sich bereits die oben beschriebenen Vorteile. Betrachtet jedoch ein Fachmann den einzelnen Motor, so erscheint es doch eher abwegig, einen zumindest für diesen einen Anwendungsfall überflüssige zweiten Aufdrückbereich vorzusehen.

An dieser Stelle sei noch angemerkt, dass die Verwendung des Begriffs Aufdrückbereich nicht irgendwelche bzw. willkürliche Flächen und Formen einer Spannschiene bezeichnet. Vielmehr sollen hierunter nur Bereiche verstanden werden, die für einen zuständigen Fachmann ersichtlich für das Ansetzen von Spannvorrichtungen, insbesondere im Hinblick auf die zu erwartende Dauerbelastung, geeignet sind. Diese Bereiche sind oftmals durch eine spezielle Formgebung oder verstärkte Ausbildung sehr leicht zu erkennen.

Im Folgenden werden Ausführungsbeispiele der vorliegenden Erfindung anhand von Zeichnungen näher erläutert. Es zeigen:
- Fig. 1: eine schematische Darstellung eines Teils eines Steuerkettentriebs eines Verbrennungsmotors, wobei eine Spannschiene in zwei Wirkstellungen eingezeichnet ist,
- Fig. 2: die Spannschiene aus Fig. 1 in einer Seitenansicht,
- Fig. 3: eine gleichartig ausgestaltete Spannschiene wie in Fig. 1, mit schematisch eingezeichneten Anordnungsvarianten für die Wirkrichtung unterschiedlicher Spannvorrichtungen und
- Fig. 4: eine Spannschiene ähnlich der Fig. 1 mit schematisch eingezeichneten unterschiedlichen Bauarten von Spannvorrichtungen.

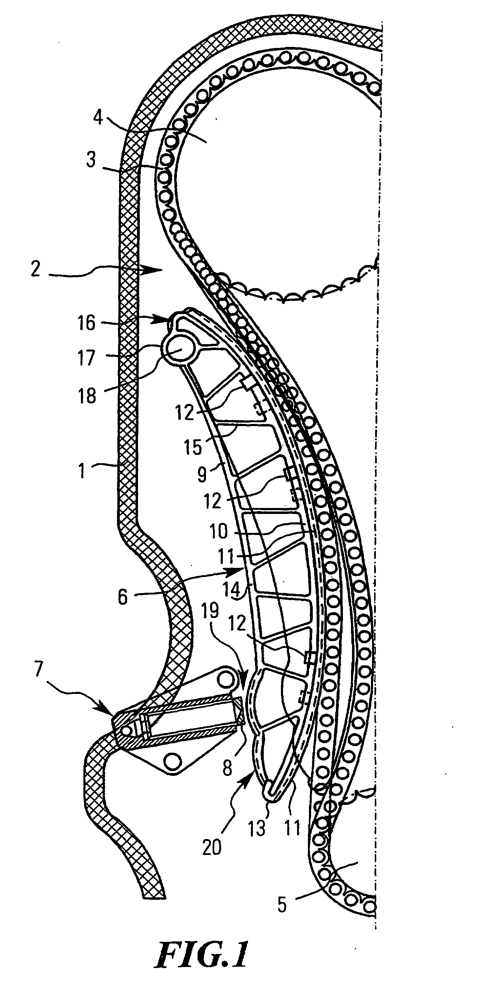

In der Fig. 1 ist schematisch ein Teil des Kettentriebgehäuses 1 eines Steuerkettentriebes eines Vierzylinderreihenmotors dargestellt. Die Steuerkette 3 ist über das oben liegende Nockenwellenkettenrad 4 und das unten liegende Kurbelwellenkettenrad 5 herumgeführt. Zwischen diesen beiden Kettenrädern 4 und 5 ist eine schwenkbar angeordnete Spannschiene 6 vorgesehen, die über einen Kettenspanner 7 gegen die Außenseite der Kette gedrückt ist. Bei dem Kettenspanner 7 handelt es sich um einen am Motor befestigten Kettenspanner 7 mit geradlinig verfahrbarem Spannkolben 8, der sowohl von einer nichtnäher dargestellten Schraubenfeder als auch über einen an der Motorölhydraulik angeschlossenen Druckraum (ebenfalls nicht näher dargestellt) mit einer Spannkraft beaufschlagbar ist. Generell könnten jegliche geeignete Ausführungsformen von Kettenspannern Anwendung finden, die in geeigneter Weise eine Kraft auf die Spannschiene 6 ausüben.

Die Spannschiene 6 besteht aus einem fachwerkförmig aufgebauten Tragkörper 9, auf dessen im Wesentlichen durchgehenden Oberseitenschiene 10 ein länglicher Gleitbelagkörper 11 angeordnet und mit dem Tragkörper verbunden ist. Die Verbindung erfolgt im vorliegenden Fall über Rastelemente 12 und einen Einhakbereich 13 am vorderen Ende des Gleitbelagkörpers 11. Somit kann der Gleitbelagkörper 11 auch im Verschleißfall ausgetauscht werden. Des Weiteren weist der Gleitbelagkörper 11 eine Gleitnut an seiner Außenfläche auf, in der die Steuerkette 3 angeordnet ist.

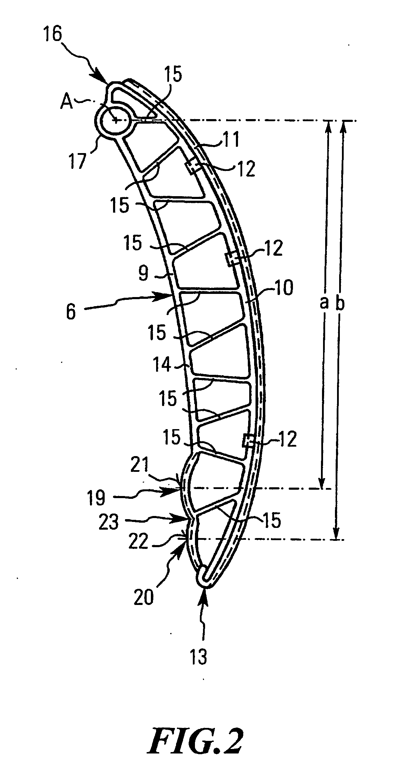

Zwischen der Oberseitenschiene 10 und einer Rückseitenschiene 14 der Spannschiene 6 erstrecken sich mehrere quer zu diesen verlaufende Stützstreben 15, um die Fachwerkstruktur bereitzustellen. Am Befestigungsendbereich 16 der Spannschiene 6 ist eine Schwenkbuchse 17 in den Fachwerkaufbau integriert, die auf einem Schwenkbolzen am Motorgehäuse schwenkbar aufgeschoben ist. Der zum freien Ende der Spannschiene 6 hin verlaufende Spannarmbereich ist mit zwei nebeneinander liegenden Aufdrückbereichen 19 und 20 versehen. Bei der vorliegenden Anordnung drückt der Kettenspanner 7 auf den ersten Aufdrückbereich 19 der Spannschiene 6. Unter Zuhilfenahme der Fig. 2 wird nunmehr die Ausgestaltung der Aufdrückbereiche 19 und 20 näher erläutert.

Die Aufdrückbereiche 19 und 20 sind durch einfache wellenförmige Formgebung der Rückseitenschiene 14 am vorderen Endbereich der Spannschiene 6 ausgestaltet. Die Aufdrückflächen 21 und 22 sind jeweils mit einer Gleitbahnnut versehen, in denen das freie Ende des jeweils zugeordneten Spannkolbens 8 gleitend eingreift, so dass eine seitliche Führung gegeben ist. Die Aufdrückflächen weisen eine zum Kettenspanner hin weisende konvexe Form auf, so dass diese auch als erhabene Aufdrücksättel bezeichnet werden könnten. Die Mittelpunkte dieser Aufdrückflächen 21 und 22, die jeweils durch die Angriffsrichtung bzw. den Angriffsmittelpunkt der Spannvorrichtung im Einbauanfangszustand vorgegeben sind, sind von der Schwenkachse A unterschiedlich weit beabstandet. Die Aufdrückfläche 21 weist den Abstand a und die Aufdrückfläche 22 den Abstand b auf. Das sich zwischen diesen beiden erhabenen Aufdrückbereichen 19 und 20 befindliche Wellental 23 ist durch eine der Stützstreben gegenüber der Oberseitenschiene 10 abgestützt.

Durch die unterschiedlichen Abstände a und b ergeben sich erwartungsgemäß verschiedene Spannmöglichkeiten.

Durch die Verwendung von zwei Aufdrückbereichen 19 und 20 kann die Spannschiene 6 nicht nur in dem in Fig. 1 dargestellten Anwendungsfall bei einem Vierzylinderreihenmotor eingesetzt werden, sondern es besteht auch die Möglichkeit, dass dieselbe Schiene in einem nicht näher dargestellten Sechszylinder-V-Motor eingesetzt wird. Die Anlenkung erfolgt dann in einem solchen Sechszylinder-V-Motor ebenfalls über einen Schwenkbolzen 18 von gleicher Größe, wobei dann eine Spannvorrichtung auf den zweiten Aufdrückbereich 20 wirkt. Es kann sich hierbei um die gleiche Spannvorrichtung oder um eine andere Spannvorrichtung anderer Bauart und Wirkungsrichtung handeln.

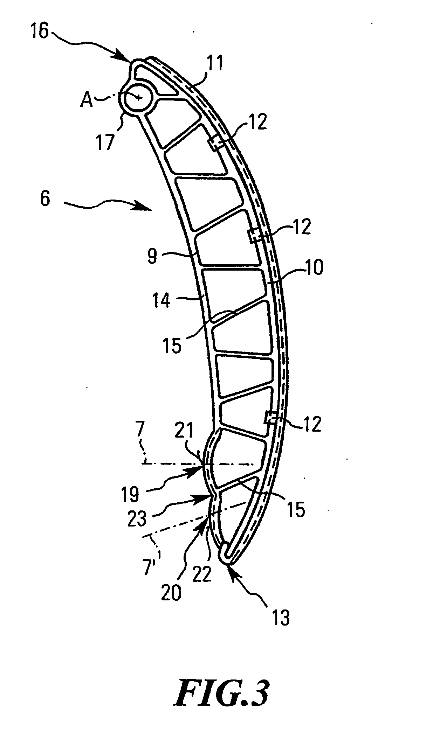

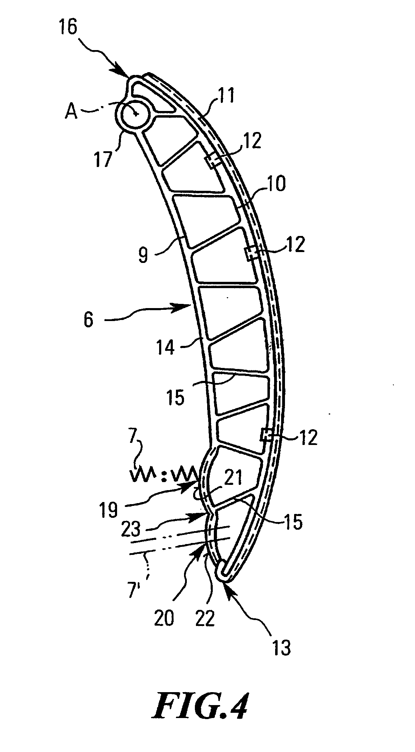

Anhand der Fig. 3 und 4 sind unterschiedliche Anordnungsmöglichkeiten schematisch skizziert.

Die Fig. 3 zeigt die Möglichkeit, gleich aufgebaute Spannvorrichtungen bei den unterschiedlichen Motorentypen zu verwenden, die jedoch in einem anderen Winkel auf die jeweils zugehörigen Aufdrückbereiche 19 und 20 aufdrücken. Im Extremfall könnten durch die Wahl der Winkel trotz des unterschiedlichen Abstands der beiden Andrückbereiche 19 und 20 von der Schwenkachse A gleiche Hebelverhältnisse erzeugt werden. Die konvexe Form der Aufdrückbereiche 19 und 20 ist dann so gewählt, dass eine Ausgleichkontur für die Spannschwenkbewegung der Spannschiene 6 gegeben ist. Das bedeutet, dass bei einem Verschwenken der Spannschiene 6 entgegen dem Uhrzeigersinn die Kontur der Aufdrückflächen 21 und 22 so gewählt ist, dass der Spannkolben 8 immer möglichst senkrecht auf die Aufdrückbereiche 19 und 20 aufdrückt.

Anhand der Fig. 4 ist schematisch dargestellt, dass bei den unterschiedlichen Motorausführungsformen auch unterschiedliche Spannvorrichtungen 7, 7' verwendet werden können, die jedoch im gleichen Winkel aufdrücken.

Eine Kombination der hier gezeigten Ausführungsvarianten ist selbstverständlich ebenfalls möglich.

## Patentansprüche

1. Spannschiene (6) für einen Zugmitteltrieb (2) eines Verbrennungsmotors erster Bauart, mit einem am Verbrennungsmotor erster Bauart um eine Schwenkachse (A) schwenkbar anbringbaren Befestigungsendbereich (16) und einem Spannarmbereich, der im vorbestimmten Abstand (a) zur Schwenkachse (A) einen Aufdrückbereich (19) für die Anlage einer Spannvorrichtung (7) erster Wirkrichtung und/oder Bauart aufweist, **dadurch gekennzeichnet, dass** der Befestigungsendbereich (16) auch an einer anderen Stelle des Zugmitteltriebs (2) des Verbrennungsmotors erster Bauart oder an einem Verbrennungsmotor zweiter Bauart um die Schwenkachse (A) schwenkbar anbringbar ausgestaltet ist und in einem vorbestimmten anderen Abstand (b) zur Schwenkachse (A) mindestens ein zweiter Aufdrückbereich (20) an dem Spannarmbereich für die Anlage einer Spannvorrichtung (7') zweiter Wirkrichtung und/oder Bauart angeordnet ist.

2. Spannschiene (6) nach Anspruch 1, **dadurch gekennzeichnet, dass** der erste und/oder zweite Aufdrückbereich (19) eine konvex gekrümmte Aufdrückfläche (21,22) aufweist oder aufweisen.

3. Spannschiene (6) nach Anspruch 2, **dadurch gekennzeichnet, dass** die Aufdrückflächen (21,22) des ersten und des zweiten Aufdrückbereichs (19,20) einen an dem jeweiligen Abstand (a,b) zur Schwenkachse (A) im Zusammenspiel mit der Wirkrichtung und/oder Bauart der ersten oder zweiten Spannvorrichtung (7,7') angepassten Krümmungsverlauf aufweist, damit ein im Wesentlichen senkrechtes Aufdrücken der ersten Spannvorrichtung (7) auf den ersten Aufdrückbereich (19) und der zweiten Spannvorrichtung . (7') auf den zweiten Aufdrückbereich (20) über den Arbeitsbereich sichergestellt ist.

4. Spannschiene (6) nach Anspruch 2 oder 3, **dadurch gekennzeichnet, dass** die Aufdrückflächen (21,22) des ersten und zweiten Aufdrückbereichs (19,20) als im Wesentlichen zusammenhängendes Wellenprofil ausgebildet sind.

5. Spannschiene (6) nach einem der Ansprüche 2 bis 4, **dadurch gekennzeichnet, dass** die Aufdrückflächen (21,22) von der Rückseite der Spannschiene (6) gebildet sind.

6. Spannschiene (6) nach einem der vorangegangenen Ansprüche, **dadurch gekennzeichnet, dass** der erste und/oder zweite Aufdrückbereich (19,20) eine als vertiefte Gleitbahn ausgestaltete Aufdrückfläche (21,22) aufweist oder aufweisen.

7. Spannschiene (6) nach einem der vorangegangenen Ansprüche, die einen Tragkörper (9) und einen darauf angeordneten Gleitbelagkörper (11) umfasst, wobei der erste und zweite Aufdrückbereich (19,20) am Tragkörper (9) angeordnet sind.

8. Spannschiene (6) nach einem der vorangegangenen Ansprüche, **dadurch gekennzeichnet, dass** der Tragkörper (9) als Fachwerkprofil mit einer die Rückseite formenden durchgehenden Rückseitenschiene (14) ausgebildet ist und die Rückseitenschiene (14) zur Ausbildung des ersten und zweiten Aufdrückbereichs (19,20) bereichsweise wellenförmig verläuft.

9. Spannschiene (6) nach Anspruch 8, **dadurch gekennzeichnet, dass** zwischen dem ersten und zweiten Aufdrückbereich (19,20) mindestens eine Stützstrebe (15) des Fachwerkprofils mit der Rückseitenschiene (14) verbunden ist.

10. Spannschiene (6) nach einem der Ansprüche 7 bis 9, **dadurch gekennzeichnet, dass** das Schwenkbefestigungsmittel (17) von einer in den Tragkörper (9) integrierten Schwenkbuchse (17) gebildet ist, die die Schwenkachse (A) vorgibt.

## Claims

1. A tensioning rail (6) for a traction drive (2) of an internal combustion engine having a first type of structural design, said tensioning rail comprising a fastening end section (16), which is adapted to be attached to said first type of internal combustion engine such that it is pivotable about a pivot axis (A), and a tensioning arm area having, at a predetermined distance (a) from said pivot axis (A), a pressure-application region (19) for contact with a tensioning device (7) which is effective in a first direction and/or which has a first type of structural design, **characterized in that** the fastening end section (16) is implemented such that it is adapted to be attached also to a different location of the traction drive (2) of said internal combustion engine having a first type of structural design or to an internal combustion engine having a second type of structural design such that it is pivotable about said pivot axis (A), and that at least one second pressure-application region (20) is arranged on the tensioning arm area at a different predetermined distance (b) from said pivot axis (A), said second pressure-application region (20) being used for contact with a tensioning device (7') which is effective in a second direction and/or which has a second type of structural design.

2. A tensioning rail (6) according to claim 1, **characterized in that** the first and/or second pressure-application region(s) (19) is/are provided with a convex pressure-application surface (21, 22).

3. A tensioning rail (6) according to claim 2, **characterized in that** the pressure-application surfaces (21, 22) of the first and second pressure-application regions (19, 20) have a curvature which is adapted to the respective distance (a, b) to the pivot axis (A) in coordination with the direction of operation and/or the structural design of said first or second tensioning device (7, 7') so that a substantially perpendicular application of pressure to the first pressure-application region (19) through the first tensioning device (7) and to the second pressure-application region (20) through the second tensioning device (7') is guaranteed throughout the operating area.

4. A tensioning rail (6) according to claim 2 or 3, **characterized in that** the pressure-application surfaces (21, 22) of the first and second pressure-application regions (19, 20) are implemented as a substantially continuous wave profile.

5. A tensioning rail (6) according to one of the claims 2 to 4, **characterized in that** the pressure-application surfaces (21, 22) are formed by the back of the tensioning rail (6).

6. A tensioning rail (6) according to one of the preceding claims, **characterized in that** the first and/or second pressure-application region(s) (19, 20) is/are provided with a pressure-application surface (21, 22) implemented as a recessed slideway.

7. A tensioning rail (6) according to one of the preceding claims, which comprises a carrier body (9) and a slideway-lining body (11) arranged thereon, the first and second pressure-application regions (19, 20) being arranged on said carrier body (9).

8. A tensioning rail (6) according to one of the preceding claims, **characterized in that** the carrier body (9) is implemented as a truss profile provided with a continuous rear-surface rail (14) forming the back, and that the rear-surface rail (14) is wave-shaped in a certain area thereof so as to form the first and second pressure-application regions (19, 20).

9. A tensioning rail (6) according to claim 8, **characterized in that**, at least one support strut (15) of the truss profile is connected to the rear-surface rail (14) between said first and second pressure-application regions (19, 20).

10. A tensioning rail (6) according to one of the claims 7 to 9, **characterized in that** the pivotable fastening means (17) is defined by a pivotable bushing (17) integrated in the carrier body (9), the pivot axis (A) being given by said pivotable bushing (17).

## Revendications

1. Rail de serrage (6) pour un dispositif d'entraînement en traction (2) d'un moteur à combustion interne d'un premier type, comportant une partie d'extrémité de fixation (16) pouvant être montée de manière à pouvoir pivoter autour d'un axe de pivotement (A) sur le moteur à combustion interne d'un premier type, et une partie de bras de serrage, qui comporte à une distance prédéterminée (a) de l'axe de pivotement (A) une zone de serrage (19) pour l'application d'un dispositif de serrage (7) ayant une première direction d'action ou d'un premier type, **caractérisé en ce que** la partie d'extrémité de fixation (16) peut être également agencée de manière à pouvoir être montée pour pouvoir pivoter autour de l'axe de pivotement (A), au niveau d'un autre emplacement du dispositif d'entraînement en traction (2) du moteur à combustion interne du premier type ou au niveau d'un moteur à combustion interne d'un second type et, au moins une seconde zone de serrage (20) est disposée à une autre distance prédéterminée (b) de l'axe de pivotement (A), sur la partie de bras de serrage pour l'application d'un dispositif de serrage (7') ayant une seconde direction d'action et/ou d'un second type.

2. Rail de serrage (6) selon la revendication 1, **caractérisé en ce que** la première et/ou la seconde zone de serrage (19) possède une surface de serrage cintrée convexe (21, 22).

3. Rail de serrage (6) selon la revendication 2, **caractérisé en ce que** les surfaces de serrage (21, 22) des première et seconde zones de serrage (19, 20) présentant une variation de courbure, qui est adaptée à la distance respective (a, b) par rapport à l'axe de pivotement (A) en liaison avec la direction d'action et/ou le type du premier ou second dispositif de serrage (7, 7') afin qu'un serrage essentiellement perpendiculaire du premier dispositif de serrage (7) sur la première zone de serrage (19) et du second dispositif de serrage (7') sur la seconde zone de serrage (20) soit garanti au moyen de la zone de travail.

4. Rail de serrage (6) selon la revendication 2 ou 3, **caractérisé en ce que** les surfaces de serrage (21, 22) des première et seconde zones de serrage (19, 20) sont agencées sous la forme d'un profil ondulé essentiellement continu.

5. Rail de serrage (6) selon l'une des revendications 2 à 4, **caractérisé en ce que** les surfaces de serrage (21, 22) sont formées par la face arrière du rail de serrage (6).

6. Rail de serrage (6) selon l'une des revendications précédentes, **caractérisé en ce que** la première et/ou la seconde zone de serrage (19, 20) possède une surface de serrage (21, 22) agencée sous la forme d'une glissière en renfoncement.

7. Rail de serrage (6) selon l'une des revendications précédentes, **caractérisé en ce qu'**il comprend un corps de support (9) et un corps de garniture coulissante (11) disposé sur le corps précédent, les première et seconde zones de serrage (19, 20) étant disposées sur le corps de support (9).

8. Rail de serrage (6) selon l'une des revendications précédentes, **caractérisé en ce que** le corps de support (9) est agencé sous la forme d'un profilé en treillis comportant un rail continu (14) situé côté arrière, qui forme le côté arrière, et le rail (14) situé côté arrière s'étend avec une forme ondulée par endroits pour la formation des première et seconde zones de serrage (19, 20).

9. Rail de serrage (6) selon la revendication 8, **caractérisé en ce qu'**au moins une entretoise d'appui (15) du profilé en treillis est reliée au rail (14) situé côté arrière, entre les première et seconde zones de serrage (19, 20).

10. Rail de serrage (6) selon l'une des revendications 7 à 9, **caractérisé en ce que** les moyens de fixation pivotants (17) sont formés par une douille pivotante (17) qui est intégrée dans le corps de support (9) et définit l'axe de pivotement (A).
